# EUROPÄISCHE PATENTANMELDUNG

(11) **EP 1 089 027 A2**
(43) Veröffentlichungstag der Anmeldung: **04.04.2001**
(21) Anmeldenummer: 00120426.2
(22) Anmeldetag: 18.09.2000
(51) Int. Cl.: F16K 27/07, F16K 31/53

(54) **Bodenablassventil**

(30) Priorität: 28.09.1999 DE 29917082 U
(71) Anmelder: GEMÜ Gebrüder Müller Apparatebau GmbH & Co. KG, 74653 Ingelfingen (DE)
(72) Erfinder: Müller, Fritz, 74653 Ingelfingen (DE); Vysiotis, Theodor, D-74653 Künzelsau (DE)
(74) Vertreter: Hering, Hartmut, Dipl.-Ing.

(57) **Zusammenfassung**

Es wird ein Bodenablaßventil (10) angegeben, welches beispielsweise zum Entleeren eines mit Flüssigkeit gefüllten Tanks (54 und 56) dient. Dieses Bodenablaßventil (10) läßt sich beispielsweise mittels eines Handrads (18) betätigen.
Zwischen dem Bodenablaßventil (10) und dem Handrad (18) ist ein Winkelgetriebe (22) angeordnet, sodaß das Handrad (18) zur Seite gerichtet und daher leichter zugänglich zum Bedienen sein kann. Durch die seitliche Ausrichtung des Handrads (18) läßt sich der für die Bedienung erforderliche Raum unterhalb des Tanks (54 und 56) und auch die Bauhöhe der Gesamtanordnung reduzieren. Das Winkelgetriebe (22) kann zwei Kegelzahnräder (24, 26) umfasssen, wobei das eine Kegelzahnrad (24) drehfest mit einer Handradspindel (20) und das andere Kegelzahnrad (26) über ein Gewinde (30) mit einer Ventilspindel (16) gekoppelt ist.

## Beschreibung

Die Erfindung betrifft ein Bodenablaßventil zum Entleeren beispielsweise eines Tanks für Flüssigkeiten.

Bodenablaßventile sind gewöhnlich an der tiefsten Stelle eines Flüssigkeitsbehälters oder Tanks angebracht, um solche Behälter völlig entleeren zu können. Bisher werden diese Bodenablaßventile mittels eines Handrades geöffnet und geschlossen, das vom Ventil aus nach unten ragt und meist schwierig zu bedienen ist.

Es ist deshalb ein relativ großer Raumbedarf erforderlich, um zu dem Handrad zu gelangen und um es betätigen zu können.

Die Erfindung sucht diesem Nachteil abzuhelfen.

Ihr liegt daher die Aufgabe zugrunde, bei einem Bodenablaßventil der eingangs genannten Art die Betätigung zu vereinfachen und den für die Betätigung erforderlichen Raum zu reduzieren.

Nach der Erfindung wird dies dadurch erreicht, daß zwischen dem Bodenablaßventil und dem Handrad ein Winkelgetriebe eingebaut ist.

Hierdurch wird erreicht, daß das Handrad zur Seite gerichtet und dadurch leichter zu bedienen ist. Durch die seitliche Ausrichtung des Handrads ist ferner der für seine Betätigung erforderliche Raum unterhalb des Tanks reduziert und damit Bauhöhe eingespart.

Der Getriebewinkel beträgt vorzugsweise 90° und die Getriebeübersetzung liegt zweckmäßigerweise bei 1:1.

Das Getriebe besteht vorteilhafterweise aus zwei Kegelzahnrädern, von denen eines drehfest mit einer Spindel des Handrades verbunden, und das andere über ein Gewinde mit der Spindel des Ventils gekoppelt ist.

Die Ventilspindel ist zweckmäßigerweise gegen Drehung gesichert und axial im Ventilgehäuse geführt.

Vorzugsweise ist die Ventilspindel mit einer Anzeigespindel gekoppelt zur von außen sichtbaren Stellungsanzeige des Ventils.

Vorteilhafterweise kann das Ventil bezogen auf seine Längsachse in Umfangsrichtung in unterschiedlichen Positionen am Tank angeflanscht werden.

Abhängig von der Einbaulage des Ventils kann somit das Handrad unterschiedliche Positionen haben, das heißt, seine Lage kann den lokalen, räumlichen Bedingungen unterhalb des Tanks angepaßt werden.

Zweckmäßigerweise kann zur Fernbedienung am Handrad eine Verlängerungsstange zum Beispiel in Form einer Gelenkwelle angeschlossen werden.

Eine beispielsweise Ausführungsform der Erfindung wird nachfolgend an Hand der Zeichnung erläutert, in der
- Fig. 1: im Schnitt ein Bodenablaßventil mit Winkelgetriebe und Handrad zeigt, und
- Fig. 2: eine Seitenansicht des Ventils, angeflanscht an den Boden eines Flüssigkeitstanks zeigt.

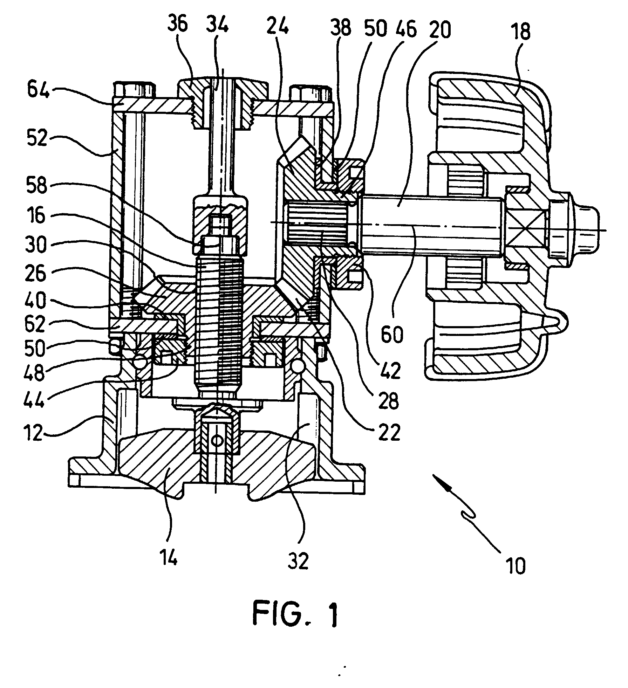

Figur 1 zeigt im Schnitt das Bodenablaßventil 10 mit einem Ventilgehäuse 12, in welchem ein Ventilstück 14 angeordnet ist, das mit einer Ventilspindel 16 gekoppelt ist, welche, wie noch beschrieben wird, axial hin- und herbewegbar ist.

Das Ventilstück 14 hat an seinem Umfang nicht näher dargestellte Nuten, in welche am Gehäuse 12 ausgebildete, längsverlaufende Rippen 32 radial eingreifen, wodurch das Ventilstück 14 gegen Drehung gesichert ist, aber axial längs der Rippen 32 verschiebbar ist. Die mit dem Ventilstück 14 gekoppelte Ventilspindel 16 ist somit ebenfalls gegen Drehung gesichert.

Die Ventilspindel 16 wird durch ein Handrad 18 betätigt. Das Handrad 18 sitzt auf einer Handradspindel 20 und ist mit dieser zum Beispiel mittels eines an der Spindel ausgebildeten Vierkantes drehfest verbunden und axial geeignet gehalten.

Zwischen dem Handrad 18 und dem Ventilstück 14 bzw. der Ventilspindel 16 ist ein Winkelgetriebe 22 angeordnet. Das Winkelgetriebe 22 ist in ein Getriebegehäuse 52 eingebaut, das mit dem Ventilgehäuse 12 geeignet, zum Beispiel durch Schrauben, verbunden ist.

Das Winkelgetriebe 22 ist durch zwei miteinander kämmenden Kegelzahnrädern 24, 26 gebildet, von denen das eine Kegelrad 24 auf einem Zapfen 28 der Handradspindel 20 sitzt, die von außen ins Innere des Getriebegehäuses 52 hineinragt. Das Kegelrad 24 ist drehfest mit dem Zapfen 28 und damit mit der Handradspindel 20 verbunden beispielsweise durch eine Kerbverzahnung oder einen Vierkant. In Achsrichtung ist das Kegelrad 24 geeignet gesichert. Das Kegelrad 24 hat einen axialen, vom Getriebegehäuse 52 nach außen gerichteten Bund 46, dessen äußeres Ende mit Gewinde versehen ist, auf das eine Zweilochmutter 42 geschraubt ist.

In eine Bohrung des Getriebegehäuses 52 ist eine Lagerbüchse 38 in Form einer Bundbüchse eingesetzt, in der das Kegelrad 24 axial und radial gelagert ist. An der Außenseite des Getriebegehäuses 52 liegt eine Gleitscheibe 50 an, welche auf die Lagerbüchse 38 aufgesetzt ist und an deren äußerer Stirnseite die Zweilochmutter 42 anliegt.

Damit ist das Kegelrad 24 radial und axial abgestützt.

Das Kegelzahnrad 24 steht, wie bereits ausgeführt, in Eingriff mit dem Kegelzahnrad 26. Dieses ist mit einem Innengewinde versehen, das in Eingriff mit einem Außengewinde der Ventilspindel 16 steht, wodurch zwischen dem Kegelrad 26 und der Ventilspindel 16 eine Gewindeverbindung 30 gebildet wird.

Das Kegelrad 26 ist mit einem axialen, zum Ventilstück 14 hin gerichteten Bund 48 versehen, der an seinem Ende ein Gewinde hat, auf das eine Zweilochmutter 44 geschraubt ist.

In einer Zwischenplatte 62 zwischen Ventilgehäuse und Getriebegehäuse ist eine Bohrung ausgebildet, in der eine Lagerbüchse 40 in Form einer Bundbüchse sitzt. An der Unterseite der Zwischenplatte 62 ist eine Gleitscheibe 50 angeordnet, an welcher die auf den axialen Bund 48 des Kegelrades 26 geschraubte Zweilochmutter 44 anliegt.

Das mit seinem Bund 48 in der Lagerbüchse 40 radial gelagerte Kegelrad 26 ist somit durch die Zweilochmutter 44 und über die Gleitscheibe 50 und die Lagerbüchse 48 auch axial in beiden Richtungen gehalten.

Mit der Ventilspindel 16 ist in axialer Richtung eine Anzeigespindel 34 verbunden, deren freies Ende sich durch einen Verschlußstopfen 36 hindurch erstreckt, welcher in eine Stirnplatte 64 des Getriebegehäuses 52 eingeschraubt ist.

Die Anzeigespindel 34 ermöglicht es, die jeweilige Stellung des Bodenablaßventils von außen zu erkennen.

Das erfindungsgemäße Bodenablaßventil wird wie folgt betätigt.

Wird das Handrad 18 gedreht, so wird diese Drehung über die Handradspindel 20, 28 auf das Kegelrad 24 übertragen, das seinerseits das mit ihm kämmende Kegelrad 26 in Drehung versetzt.

Da das letztere, wie oben beschrieben, in Gewindeeingriff mit der Ventilspindel 16 steht, diese sich aber nicht drehen kann, wird die Drehbewegung des Kegelrades 26 in eine Axialbewegung der Ventilspindel 16 umgesetzt, wodurch auch das mit der Ventilspindel 16 verbundene Ventilstück 14 axial bewegbar ist und damit das Bodenablaßventil 10 je nach Drehrichtung des Handrades 18 geöffnet oder geschlossen werden kann.

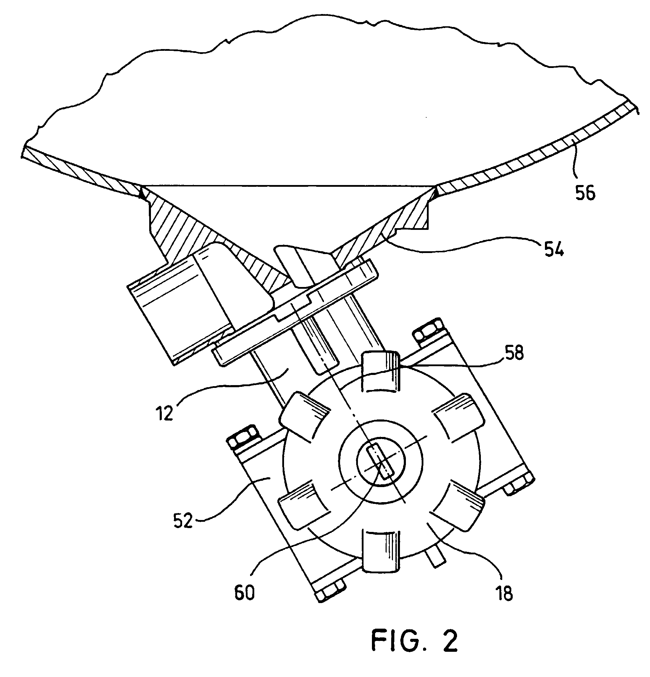

Wie Figur 2 zeigt, ist das Ventilgehäuse 12 des Bodenablaßventiles 10 an einem Bodenablaßkörper 54 befestigt, zum Beispiel mittels nicht dargestellter Schrauben angeflanscht. Der Bodenablaßkörper 54 ist am tiefsten Punkt eines Tanks 56 angebracht, zum Beispiel angeschweißt.

Das Lochbild der Befestigungsschrauben ist so gewählt, daß das Ventil 10 in unterschiedlichen Einbaulagen an dem Bodenablaßkörper 54 angebracht werden kann.

Das Ventil kann in jeder gewünschten Position am Bodenablaßkörper 54 angeschraubt werden.

Da die Handradspindelachse 60, wie insbesondere Figur 1 zeigt, quer zur Ventilspindelachse 58 verläuft, kann das Handrad 18 beim gewählten Beispiel beliebig viele unterschiedliche Einbaulagen erhalten, wodurch die Lage des Handrades den lokalen, räumlichen Gegebenheiten angepaßt werden kann und seine Betätigung erleichtert wird.

Gegebenenfalls kann zum Zwecke der Fernbedienung am Handrad eine Verlängerungsstange zum Beispiel in Form einer Gelenkwelle angeschlossen werden.

Der Winkel zwischen den beiden Kegelrädern 24 und 26 beträgt im beschriebenen Beispiel vorzugsweise 90°, es können bei Bedarf aber auch Winkelgetriebe mit anderen Winkel vorgesehen werden. Die Übersetzung des hier beschriebenen Winkelgetriebes 22 ist zweckmäßigerweise 1:1, aber auch hier können im Bedarfsfall andere Übersetzungsverhältnisse verwendet werden.

Wie eingangs bereits ausgeführt, ermöglicht das Winkelgetriebe eine seitliche Anordnung des Handrades, wodurch der zu dessen Betätigung erforderliche Raum und damit auch die Bauhöhe reduziert werden können.

## Patentansprüche

1. Bodenablaßventil zum Entleeren eines Tanks (54 und 56) für Flüssigkeiten mit zum Beispiel einem Handrad (18) zum Betätigen des Ventils (10), **dadurch gekennzeichnet**, daß zwischen dem Bodenablaßventil (10) und dem Handrad (18) ein Winkelgetriebe (22) angeordnet ist.

2. Ventil nach Anspruch 1, **dadurch gekennzeichnet**, daß der Getriebewinkel (90°) beträgt.

3. Ventil nach Anspruch 1 oder 2, **dadurch gekennzeichnet**, daß die Getriebeübersetzung 1:1 beträgt.

4. Vorrichtung nach einem der vorhergehenden Ansprüche, **dadurch gekennzeichnet**, daß das Winkelgetriebe (22) aus zwei Kegelzahnrädern (24, 26) gebildet ist, von denen das eine (24) drehfest mit der Handradspindel (20) verbunden, und das andere (26) über ein Gewinde (30) mit der Ventilspindel (16) gekoppelt ist.

5. Ventil nach Anspruch 4, **dadurch gekennzeichnet**, daß die Ventilspindel (16) gegen Drehung gesichert und axial im Ventilgehäuse (12) geführt ist.

6. Ventil nach Anspruch 4 oder 5, **dadurch gekennzeichnet**, daß die Ventilspindel (16) mit einer Anzeigespindel (34) gekoppelt ist zur äußeren Stellungsanzeige des Ventils (10).

7. Ventil nach einem der vorhergehenden Ansprüche, **dadurch gekennzeichnet**, daß das Ventil (10) in Umfangsrichtung um seine Ventilspindelachse (58) in unterschiedlichen Positionen an einem Bodenablaßkörper (54) des Tanks (56) befestigbar ist.

8. Ventil nach einem der vorhergehenden Ansprüche, **dadurch gekennzeichnet**, daß zur Fernbetätigung am Handrad (18) eine Verlängerungsstange insbesondere in Form einer Gelenkwelle anschließbar ist.
